# EUROPÄISCHE PATENTSCHRIFT

(11) **EP 1 169 797 B1**
(45) Veröffentlichungstag und Bekanntmachung des Hinweises auf die Patenterteilung: **22.10.2003**
(21) Anmeldenummer: 00929348.1
(22) Anmeldetag: 11.04.2000
(51) Int. Cl.: H04B 10/00

(54) **VORRICHTUNG ZUR OPTISCHEN DATENÜBERTRAGUNG IN FREIEN RAUM**
DEVICE FOR OPTICALLY TRANSMITTING DATA
DISPOSITIF DE TRANSMISSION OPTIQUE DE DONNEES

(30) Priorität: 14.04.1999 DE 19916754
(43) Veröffentlichungstag der Anmeldung: 09.01.2002
(73) Patentinhaber: ROschiwal + Partner Ingenieur GmbH Augsburg, 86179 Augsburg (DE)
(72) Erfinder: HEIDRICH, Wolfgang, D-52379 Langerwehe (DE); REFLE, Franz, D-86673 Villenbach (DE)
(74) Vertreter: Rapp, Bertram, Dr.
(86) Internationale Anmeldenummer: EP0003191
(87) Internationale Veröffentlichungsnummer: WO00064076

(56) Entgegenhaltungen:
- US-A- 3 953 727
- US-A- 4 090 067
- US-A- 5 517 768
- US-A- 5 521 733
- US-A- 5 867 318

## Beschreibung

Die vorliegende Erfindung betrifft eine Vorrichtung zur optischen Datenübertragung nach dem Oberbegriff des Anspruches 1.

Es sind Vorrichtungen zur optischen Datenübertragung im freien Raum bekannt, bei denen eine modulierte optische Strahlung von einem Lichtsender in den freien Raum räumlich gerichtet emittiert wird und die emittierte Strahlung von einem lichtempfindlichen Empfänger detektiert wird. Das vom Lichtsender emittierte Strahlungsfeld ist dabei mehr oder weniger stark aufgeweitet. Zur Strahlformung werden üblicherweise optische Elemente verwendet, wie z.B. Linsen, mit denen die Strahlung aufgeweitet und/oder kollimiert wird.

Bei diesen bekannten Vorrichtungen ist allerdings nur eine eindimensional räumlich gerichtete Übertragung von Dateninformationen zwischen dem Lichtsender und dem Empfänger möglich. Weiterhin ist es schwierig, die übertragene Dateninformation an mehreren unterschiedlichen Stellen innerhalb des aufgeweiteten Strahlungsfeldes abzugreifen, da aufgrund des limitierten transversalen Strahldurchmessers nicht beliebig viele Detektoren innerhalb des Strahlungsfeldes plaziert werden können. Bei Verwendung von typischen Laserdioden als Lichtsender und entsprechenden Photodioden als Detektoren ist der transversale Strahldurchmesser aufgrund der begrenzten Empfindlichkeit der Empfänger auf etwa 3 m limitiert, bei einer typischen Übertragungsstrecke von ca. 100 m.

Um eine Vielzahl von Detektoren in transversaler Richtung an unterschiedlichen Positionen innerhalb des Strahlungsfeldes plazieren zu können, ist eine zusätzliche Aufweitung des Strahlprofils notwendig, was aber wegen der limitierten Detektorempfindlichkeit eine Erhöhung der Strahlungsleistung erfordert. Dies ist aber in den meisten Anwendungen aus sicherheitstechnischen Aspekten nicht möglich und würde zudem die Verwendung einer Vielzahl von Laserdioden, beispielsweise als planes Diodenarray angeordnet, erfordern.

Weiterhin sind Vorrichtungen zur optischen Datenübertragung im freien Raum bekannt, bei denen ein Lichtsender so ausgestaltet ist, daß das emittierte Strahlungsfeld einen größeren Raumwinkelbereich bis hin zum gesamten Raum ausleuchtet. Das emittierte Licht kann somit von einer Vielzahl von Empfängern an unterschiedlichen Orten im Raum detektiert werden. Damit wird erreicht, daß die gesendete Information im gesamten Raum zur Verfügung steht.

Die üblicherweise in den Lichtsendern als Lichtquelle verwendeten Leuchtdioden oder Diodenlaser weisen einen limitierten Abstrahlwinkel auf. Daher ist es zur Ausgestaltung eines in den gesamten Raum abstrahlenden Lichtsenders erforderlich, diesen mit einer Vielzahl von einzelnen, unabhängigen Lichtquellen auszustatten, beispielsweise einer Vielzahl von Leuchtdioden oder Diodenlaser, welche auf einer gekrümmten Oberfläche angeordnet sind. Dies verursacht einerseits die vorerwähnten sicherheitstechnischen Probleme und ist andererseits auch aufwendig und teuer in der Herstellung. Letzteres insbesondere deshalb, weil eine Vielzahl von Lichtquellen benötigt wird und eine zusätzliche Elektronik zur synchronen Ansteuerung der einzelnen Lichtquellen verwendet werden muß.

Beide beschriebenen Vorrichtungsarten zur optischen Datenübertragung sind im freien Raum sowohl für weite als auch für kürzere Übertragungsstrecken für eine Vielzahl bestimmter Anwendungen ungeeignet. So beispielsweise bei der Übertragung von Information an eine Vielzahl von zu steuernden Maschinen innerhalb einer Maschinenhalle. Bei dieser Anwendung sollen von einem oder mehreren, unabhängig voneinander betriebenen Lichtsendern Informationen auf optischem Wege an eine Vielzahl von Maschinen übertragen werden. Dabei können Hindernisse im direkten Verbindungsweg zwischen Sender und Empfänger auftreten, was eine direkte, unidirektional gerichtete Informationsübertragung verhindert.

Falls von mehreren Sendern unterschiedliche Informationen unabhängig voneinander an eine Vielzahl von Empfängern gesendet werden sollen, besteht zudem die Gefahr, daß sich die unterschiedlich modulierten Informationssignale gegenseitig beeinflussen und es so zu Störungen bei der Informationsübertragung kommt. Ausserdem kann hier aus sicherheitstechnischen Gründen nur mit geringen Lichtleistungen gesendet werden, oder es muß darauf geachtet werden, daß sich das Bedienpersonal der Maschinen nicht innerhalb des Strahlungsfeldes befindet.

Es ist das Ziel der aus US-A-5 521 733 bekannten Vorrichtung, ein optischen Signal in mehrere optische Signale zu teilen, die an verschiedene Empfänger zuführen sind, welche außerhalb des normalen Emissions Kegels des Signals liegen.
In US-A-5 521 733 wird diese Aufgabe dadurch gelöst, daß optische Elemente in Form von teildurchlässigen Spiegel innerhalb des Primärstrahles gestellt sind.

Es ist daher die Aufgabe der vorliegenden Erfindung eine Vorrichtung zur optischen Datenübertragung zur Verfügung zu stellen, welche es ermöglicht, bei niedrigen optischen Strahlungsleistungen die übertragenen Dateninformationen einer Vielzahl von Empfängern störungsfrei im gesamten Raum zugänglich zu machen. Insbesondere soll eine Vorrichtung zur Verfügung gestellt werden, welche es ermöglicht, die in der ausgesandten optischen Strahlung enthaltene Dateninformation in alle Raumrichtungen unter Umgehung von Hindernissen im Strahlengang zu übertragen.

Diese Aufgabe wird mit der Vorrichtung zur optischen Datenübertragung mit den kennzeichnenden Merkmalen des Anspruches 1 gelöst. Vorteilhafte Ausgestaltungen sind den Unteransprüchen zu entnehmen.

Nachfolgend wird eine bevorzugte Ausführungsform der vorliegenden Erfindung unter Bezugnahme auf die Zeichnungen beschrieben.
**Fig. 1** zeigt eine mögliche Anordnung der erfindungsgemäßen Vorrichtung zur optischen Datenübertragung mit den kennzeichnenden Merkmalen des Anspruches 1.
**Fig. 2** zeigt eine weitere Ausführungsform der erfindungsgemäßen Vorrichtung.

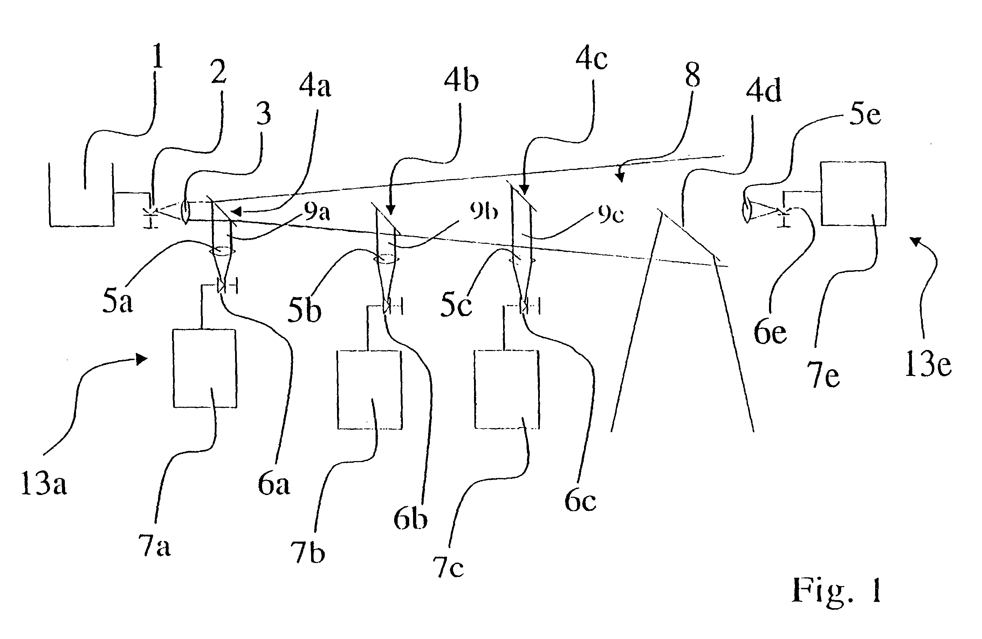

Wie in Fig. 1 dargestellt umfaßt eine mögliche erfindungsgemäße Anordnung zur optischen Datenübertragung im wesentlichen die folgenden Grundelemente:
- Ein Modulator 1, dem der zu übertragende Datenstrom in Form von digitalen Bits, welche Daten-, Sprach-, Ton- und Bildinformationen umfassen, zugeführt ist,
- ein Lichtsender 2, vorzugsweise eine Laserdiode, welche vom Modulator 1 gesteuert ein entsprechend dem Datenstrom moduliertes Lichtsignal emittiert,
- ein optisches Element 3, vorzugsweise eine Anordnung von Linsen, zur räumlichen Formung der vom Lichtsender 2 emittierten optischen Strahlung,
- eine Vielzahl von optischen Elementen 4, welche jeweils innerhalb des Emissionskegels 8 des Lichtsenders 2 angeordnet sind, um einen Teil der Strahlungsenergie als Sekundärstrahlen 9 auszukoppeln und in eine andere Richtung umzulenken,
- eine Vielzahl von optischen Elementen 5, vorzugsweise Linsen, welche jeweils einem Sekundärstrahl 9 zugeordnet sind und diesen fokussieren,
- eine Vielzahl von lichtempfindlichen Detektoren 6, welche jeweils dem Primärstrahl 8 oder einem Sekundärstrahl 9 zugeordnet sind, zur Detektion der auf ihre lichtempfindliche Fläche fokussierten Strahlen und Ausgabe eines elektrischen Detektionssignals,
- eine Vielzahl von Demodulatoren 7, welche jeweils einem Detektor 6 zugeordnet sind, zur Demodulation der Detektor-Ausgangssignale.

Der erfindungsgemäßen Vorrichtung von Fig. 1 liegt folgendes Funktionsprinzip zugrunde:

Der Modulator 1 steuert den Lichtsender 2, wie es bei Vorrichtungen zur optischen Datenübertragung aus dem Stand der Technik bekannt ist. Hierbei werden die gängigen Verfahren zur Aufprägung einer Modulation auf eine optische Strahlung verwendet. Es können auch Multiplexing-Verfahren, wie beispielsweise Wellenlängen-Multiplexing, Frequenz-Multiplexing, "Time-division"-Multiplexing oder "Spread-spectrum"-Multiplexing zur Anwendung kommen.

Das vom Lichtsender 2 emittierte modulierte Strahlungsfeld (Primärstrahl, 8) wird mittels einer Linse 3 teilweise kollimiert. Der Divergenzwinkel der Strahlung beträgt nach der Strahlformung ca. 2 Grad bei einem Strahlurchmesser von etwa 20 cm. Zur Auskopplung eines Teils der Strahlung ist innerhalb des sich nach der Strahlformung ergebenden Emissionskegels eine Vielzahl von teildurchlässigen Spiegeln 4a, 4b, 4c angeordnet. Die teildurchlässigen Spiegel 4a-4c sind in longitudinaler Richtung, also entlang der Ausbreitungsrichtung des Primärstrahls, an unterschiedlichen Stellen positioniert. Sie können hintereinander oder in transversaler Richtung zueinander versetzt angeordnet sein.

Die teildurchlässigen Spiegel 4a-4c können beispielsweise durch eine plane Glasplatte mit einer reflektierenden Oberfläche gebildet sein. Vorteilhafterweise weist diese Glasplatte noch eine Beschichtung auf, die so ausgewählt ist, daß das Verhältnis von Transmission/Reflexion einen gewünschten Wert aufweist, beispielsweise 1. Je nach Transmissionsvermögen der teildurchläsigen Spiegel 4a-4c wird ein bestimmter Teil des auf dem ersten teildurchlässigen Spiegel 4a auftreffenden Lichts durchgelassen. Ein bestimmter Teil der auftreffenden Strahlungsenergie wird jedoch an der reflektierenden Oberfläche des teildurchlässigen Spiegels 4a reflektiert und je nach Neigung der Spiegeloberfläche bezüglich der Ausbreitungsrichtung des Primärstrahls 8 in eine zu dieser Richtung unterschiedlichen Richtung umgelenkt (Sekundärstrahl, 9a). Das so aus dem Emissionskegel des Primärstrahls 8 ausgekoppelte und umgelenkte Licht wird anschließend mittels einer Linse 5a auf die lichtempfindliche Fläche eines Detektors 6a fokussiert. Das elektrische Ausgangssignal des Detektors 6a wird anschließend dem zugeordneten Demodulator 7a zugeführt, wo es in bekannter Weise zur Datenübertragung weiterverarbeitet wird. Der Detektor 6 und der Demodulator 7 können hierbei in einem gemeinsamen Gehäuse angeordnet und so als eine Lichtempfängereinheit 13 zusammengefaßt sein.

Da ein Teil des vom Lichtsender 2 emittierten Lichts entweder am ersten teildurchlässigen Spiegel 4a seitlich vorbei geht oder ihn ungehindert passieren kann, steht die mit dem Licht transportierte Information auch noch hinter dem ersten teildurchlässigen Spiegel 4a zur Verfügung. Dort kann dann wiederum ein zweiter teildurchlässiger Spiegel 4b angebracht werden, zur Ausblendung und Umlenkung eines weiteren Sekundärstrahls 9b, analog zum ersten Spiegel 4a.

In einer weiteren Ausführungsform der erfindungsgemäßen Vorrichtung gemäß Figur 1 ist vorgesehen, die teildurchlässigen Spiegel 4a-4c so anzuordnen, daß sie um eine Achse schwenkbar sind, wobei die Schwenkachse vollständig in der reflektierenden Oberfläche der Spiegel 4a-4c verläuft. Vorteilhafterweise kann ein Spiegel 4 auch um zwei zueinander senkrecht stehende Achsen schwenkbar angeordnet sein. Zur Einstellung der Neigung der Spiegeloberfläche um die Schwenkachse ist ein Motor mit Steuerung vorgesehen. Dieser kann beispielsweise so gesteuert werden, daß die Spiegeloberfläche um die Schwenkachse eine oszillierende Bewegung ausführt.

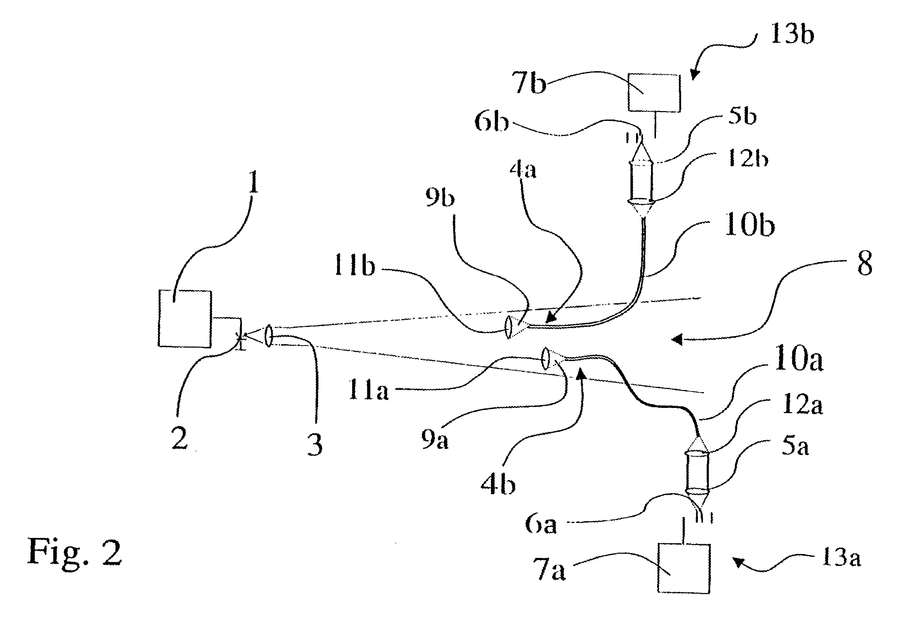

Figur 2 zeigt ein weiteres vorteilhaftes Ausführungsbeispiel der vorliegenden Erfindung. Der Sekundärstrahl 9a, 9b wird hier in einen oder mehrere Lichtwellenleiter 10a, 10b eingekoppelt. Der Lichtwellenleiter ist durch eine Glasfaser oder durch hochflexible Kunststoff-Wellenleiter gebildet. Zur Einkopplung des Sekundärstrahls 9a, 9b in einen Lichtwellenleiter 10a, 10b wird vorzugsweise eine Linse 11a, 11b verwendet. Der Durchmesser der Linse 11a, 11b bestimmt hierbei die Leistung des Sekundärstrahls 9a, 9b, der vom Primärstrahl 8 ausgeblendet und in den Lichtwellenleiter 10a, 10b eingekoppelt wird. Der am einen Ende des Lichtwellenleiters 10a, 10b eingekoppelte Sekundärstrahl 9a, 9b wird in dem Lichtwellenleiter 10a, 10b geführt und am anderen Ende ausgekoppelt. Das Ende des Lichtwellenleiter 10a, 10b an dem das Licht eingekoppelt wird, ist dabei räumlich fixiert, wohingegen das Auskoppelende frei beweglich angeordnet ist.

Zur Auskopplung des Sekundärstrahls 9a, 9b aus dem Lichtwellenleiter 10a, 10b ist diesem eine Auskoppeloptik 12a, 12b zugeordnet. Die Auskoppeloptik 12 kann hierbei an die räumliche Verteilung einer Vielzahl von Lichtempfängern 13 (in Fig. 2 nicht dargestellt) angepaßt werden, um eine geeignete Strahlformung vorzunehmen. Hat man beispielsweise eine lineare Verteilung von Detektoren 6, so ist am Auskoppelende des Lichtwellenleiters 10 eine Linse 12 angeordnet, welche den Sekundärstrahl 9 aus dem Lichtwellenleiter 10 auskoppelt und einen Strichfokus entlang der linearen Anordnung der Detektoren 6 erzeugt.

Der aus dem Lichtwellenleiter 10 ausgekoppelte Sekundärstrahl 9 weist aufgrund der flexblen Eigenschaften des Lichtwellenleiters 10 eine Ausbreitungsrichtung auf, welche von der Ausbreitungsrichtung des Primärstrahls 8 verschieden sein kann. Die Ausbreitungsrichtung des ausgekoppelten Sekundärstrahls 9 im freien Raum kann hierbei durch die Ausrichtung des beweglichen Endes des Lichtwellenleiters 10 genau eingestellt werden.

Zur Verarbeitung der mit der optischen Strahlung transportierten Dateninformation wird der ausgekoppelte Sekundärstrahl 9 mittels einer Linse 5 auf den Lichtempfänger 13 fokussiert, welcher das optische Signal detektiert und in ein elektrisches Signal umwandelt. Das elektrische Signal wird dann in bekannter Weise durch den Demodulator 7 weiterverarbeitet.

In einer vorteilhaften Ausführungsform führt der Lichtwellenleiter 10 an seinem beweglichen Ende eine mechanische Schwingung aus. Hierzu ist am beweglichen Ende des Lichtwellenleiters 10 eine mechanische Führung angebracht, über welche die Schwingung von einem Motor mechanisch auf das bewegliche Ende des Lichtwellenleiters 10 übertragen werden kann. Die Übertragung der Schwingung kann auch dadurch realisiert sein, daß das bewegliche Ende des Lichtwellenleiters 10 in einem Material eingebettet ist oder mit einem Material versehen ist, welches durch äußere Kraftfelder, beispielsweise durch elektrische oder magnetische Wechselfelder, zu Schwingungen angeregt werden kann. Hierbei kann es sich beispielsweise um ferromagnetische, piezo-elektrische oder magneto-resistive Materialien handeln.

Ein Vorteil der erfindungsgemäßen Vorrichtung gemäß Figur 1 ergibt sich aus der Möglichkeit, die mit dem Licht transportierte Information an mehreren unterschiedlichen Stellen entlang der Ausbreitungsrichtung des Primärstrahls 8 zu entnehmen. Die Umlenkung des Lichts in eine zur Ausbreitungsrichtung des Primärstrahls verschiedenen Richtung erlaubt es darüberhinaus die Information in jede gewünschte Raumrichtung zu transportieren. Durch die schwenkbare Anordnung der teildurchlässigen Spiegel 4a-4c gemäß des Ausführungsbeispiels von Figur 1 ist es darüberhinaus möglich, den Sekundärstrahl in einen erweiterten Raumwinkelbereich zu lenken. Dies ermöglicht die Übertragung der Information in den gesamten Raumbereich.

Dieses Merkmal der Erfindung erweist sich als vorteilhaft, insbesondere bei der Datenübertragung zwischen an unterschiedlichen Orten in einer Werkanlage oder Maschinenhalle stehende Maschinen. Aus sicherheitstechnischen Gründen ist es hier oftmals notwendig, die intensive Laserstrahlung des Primärstrahls an für das Bedienungspersonal der Maschinen unzugänglichen Orten zu führen, beispielsweise knapp unterhalb der Decke der Maschinenhalle. An den jeweiligen Standorten der einzelnen Maschinen können dann die teildurchlässigen Spiegel 4a-4c so innerhalb des Emissionskegels des Primärstrahls angeordnet werden, daß der ausgekoppelte Sekundärstrahl 9 so umgelenkt wird, daß er auf den sich an der Maschine befindlichen Detektor 6 gelenkt wird. Da der umgelenkte Sekundärstrahl 9 nur einen Bruchteil der Gesamtleistung des Primärstrahls 8 umfaßt, kann der Sekundärstrahl 9 ohne Sicherheitsrisiko im Arbeitsbereich des Bedienungspersonals geführt werden.

Die durch die teildurchlässigen Spiegel 4a-4c ausgekoppelten und umgelenkten Sekundärstrahlen 9a-9c können vorteilhafterweise durch weitere Spiegel umgelenkt werden, so daß der Sekundärstrahl an Hindernissen vorbei geführt werden kann.

Die in Figur 2 gezeigte Ausführungsform ermöglicht ebenfalls ein Auskoppeln und Umlenken eines Teils des Primärstrahls 8 durch die Einkopplung und Führung der Sekundärstrahlen 9 in einen flexiblen Lichtwellenleiter 10. Durch die bekannten flexiblen Eigenschaften solcher Lichtwellenleiter ist es möglich, den Sekundärstrahl 9 an Hindernissen im direkten Strahlengang zwischen Lichtsender 2 und Detektor 6 vorbei zu führen. Dabei kann die gewünschte Ausbreitungsrichtung des ausgeblendeten Sekundärstrahls 9 durch das bewegliche Ende des Wellenleiters 10 eingestellt werden, um genau auf die lichtempfindliche Fläche des Detektors 6 fokussiert zu werden.

Weiterhin ist mit dieser Ausführungsform das angesprochene Sicherheitsrisiko vollständig eliminiert, weil die Sekundärstrahlen 9a, 9b im wesentlichen in den Lichtwellenleitern 10a, 10b geführt sind und somit nicht in den Aufenthaltsbereich des Personals eingreifen.

In einer erweiterten Ausführungsform zu der in Figur 2 gezeigten Anordnung ist vorgesehen, einen Teil des Primärstrahls 8 in ein Bündel von Lichtwellenleitern einzukoppeln. Die Enden der einzelnen Lichtwellenleiter, in welche die Sekundärstrahlen 9 eingekoppelt werden, sind dabei bündig miteinander abschliessend und bündelförmig nebeneinander liegend angeordnet. Eine zwischen dem Lichtsender 2 und dem Einkoppel-Ende des Wellenleiterbündels angeordnete Linsenoptik koppelt einen Teil des Primärstrahls 8 auf die Vielzahl der einzelnen Wellenleiter verteilt in das Wellenleiterbündel ein. Das Licht wird anschliessend in den einzelnen Wellenleitern unabhängig voneinander geführt. Das jeweils andere Ende der einzelnen Wellenleiter ist dabei wie in der Anordnung von Figur 2 frei beweglich.

Zur Auskopplung des geführten Lichts ist jedem der Lichtwellenleiter eine Auskoppeloptik 12 zugeordnet. Damit wird ermöglicht das aus den einzelnen Lichtwellenleitern am jeweils freien Ende ausgekoppelte Licht in unterschiedliche Richtungen zu lenken. Somit können die einzelnen Sekundärstrahlen 9 direkt auf den jeweiligen Lichtempfänger 13 ausgerichtet werden. Auf diese Weise kann die mit der Strahlung transportierte Information in einen vergrößerten Raumwinkelbereich, bis hin zum gesamten Raum übertragen werden.

Durch Eingießen der Auskoppelenden der einzelnen Lichtwellenleiter in ein Gießharz oder einen Kunststoff können die Lichtwellenleiter gegeneinander mechanisch so fixiert werden, daß damit eine direkte Ausrichtung auf den zugeordneten und räumlich feststehenden Lichtempfänger 13 ermöglicht wird.

## Patentansprüche

1. Vorrichtung zur optischen Datenübertragung zwischen einem Lichtsender (2), der einen modulierten Primärstrahl (8) emittiert und einer Vielzahl von Lichtempfängern (13) zur Detektion und Demodulation des vom Lichtsender (2) emittierten Lichtes, bei der mindestens ein optisches Element (4) innerhalb des Primärstrahls (8) plaziert ist, so daß zumindest ein Teil des Primärstrahls (8) auf das oder jedes optische Element (4) auftrifft, wodurch ein Sekundärstrahl (9) aus dem Primärstrahl ausgeblendet ist und das oder jedes optische Element (4) den Sekundärstrahl (9) umlenkt und der Sekundärstrahl (9) nach dem Austritt aus dem oder jedem optischen Element (4) sich im freien Raum in einer zur Ausbreitungsrichtung des Primärstrahls (8) verschiedenen Richtung ausbreitet, **dadurch gekennzeichnet, daß** mindestens eines der optischen Elemente eine mechanische Schwingung ausführt, wodurch sich der Sekundärstrahl (9) zumindest zeitweilig in einen Raumwinkelbereich erstreckt, der vom Primärstrahl nicht erfaßt ist.

2. Vorrichtung nach Anspruch 1, **dadurch gekennzeichnet, daß** mindestens eines der optischen Elemente (4) einen Lichtwellenleiter (10) umfaßt, welcher an dem einen Ende, an dem der Sekundärstrahl (9) eintritt, fixiert ist und am anderen Ende eine mechanische Schwingung ausführt.

3. Vorrichtung nach Anspruch 2, **dadurch gekennzeichnet, daß** jedem Lichtwellenleiter (10) sowohl eine Einkoppeloptik (11) zugeordnet ist, die einen Teil des Primärstrahls (8) in den Lichtwellenleiter einkoppelt als auch eine Auskoppeloptik (12) zur Auskopplung des im Lichtwellenleiter (10) geführten Sekundärstrahls (9).

4. Vorrichtung nach Anspruch 1, **dadurch gekennzeichnet, daß** mindestens eines der optischen Elemente (4) ein Bündel von Lichtwellenleitern umfaßt, welches von einer Vielzahl von Lichtwellenleitern (10) gebildet ist, deren Einkoppelenden bündelförmig nebeneinander liegend angeordnet sind und dem Lichtwellenleiterbündel eine Optik zugeordnet ist zur Ausblendung des Sekundärstrahls (9) aus dem Primärstrahl (8) und zur Einkopplung des Sekundärstrahls (9) in das Lichtwellenleiterbündel, wobei die Auskoppelenden der einzelnen Lichtwellenleiter (10) unabhängig voneinander beweglich angeordnet sind.

5. Vorrichtung nach einem der voranstehenden Ansprüche, **dadurch gekennzeichnet, daß** mindestens eines der optischen Elemente (4) eine plane reflektierende Oberfläche aufweist und um mindestens eine Achse schwenkbar angeordnet ist, wobei die Schwenkachse vollständig in dieser reflektierenden Oberfläche verläuft.

6. Vorrichtung nach Anspruch 4, **dadurch gekennzeichnet, daß** die Orientierung der reflektierenden Oberfläche bezüglich der Ausbreitungsrichtung des Primärstrahls (8) um die oder jede Schwenkachse oszilliert.

7. Vorrichtung nach einem der voranstehenden Ansprüche, **dadurch gekennzeichnet, daß** mindestens eines der optischen Elemente (4) ein teildurchlässiger Spiegel ist.

8. Vorrichtung nach einem der voranstehenden Ansprüche, **dadurch gekennzeichnet, daß** das oder jedes optische Element (4) sowohl längs als auch quer zur Ausbreitungsrichtung der vom Lichtsender (2) emittierten Strahlung verschiebbar ist.

9. Vorrichtung nach Anspruch 3, **dadurch gekennzeichnet, daß** der Lichtsender (2) optische Strahlung unterschiedlicher Wellenlängen emittiert, wobei jeder der Lichtwellenleiter (10) ausschließlich Licht einer einzigen Wellenlänge führt.

10. Vorrichtung nach einem der voranstehenden Ansprüche, **dadurch gekennzeichnet, daß** das demodulierte Ausgangssignal des Lichtempfängers (13) einer Steuerungseinheit oder Regelungseinheit von Maschinen zugeführt ist.

11. Vorrichtung nach einem der voranstehenden Ansprüche, **dadurch gekennzeichnet, daß** das demodulierte Ausgangssignal des Lichtempfängers (13) einer Steuerungseinheit oder Regelungseinheit von von beweglichen Teilen an Kränen zugeführt ist.

## Claims

1. Device for optical data transmission between a light-emitting device (2) which emits a modulated primary beam (8), and a plurality of light-receiving devices (13) for detecting and demodulating the light emitted by the light-emitting device (2), in which at least one optical element (4) is placed within the primary beam (8) so that at least a part of the primary beam (8) impinges on the or each optical element (4), through which a secondary beam (9) is separated from the primary beam and the or each optical element (4) deflects the secondary beam (9), and the secondary beam (9), after emerging from the or each optical element (4), is propagated in the free space in a different direction to the direction of propagation of the primary beam (8), **characterised in that** at least one of the optical elements executes a mechanical oscillation, through which the secondary beam (9) at least temporarily extends into a spatial angle region which is not covered by the primary beam.

2. Device according to claim 1, **characterised in that** at least one of the optical elements (4) comprises a light waveguide (10) which is fixed at the end at which the secondary beam (9) enters, and executes a mechanical oscillation at the other end.

3. Device according to claim 2, **characterised in that** each light waveguide (10) has associated with it an in-feeding optical system (11) which feeds a part of the primary beam (8) into the light waveguide, and an out-feeding optical system (12) for out-coupling the secondary beam (9) carried in the light waveguide (10).

4. Device according to claim 1, **characterised in that** at least one of the optical elements (4) comprises a bundle of light waveguides which is formed by a plurality of light waveguides (10), the in-feeding ends of which are arranged next to one another in the form of a bundle, and the light waveguide bundle has associated with it an optical system for separating the secondary beam (9) from the primary beam (8) and for feeding the secondary beam (9) into the light waveguide bundle, the out-feeding ends of the individual light waveguides (10) being arranged so that they can be moved independently of one another.

5. Device according to one of the preceding claims, **characterised in that** at least one of the optical elements (4) exhibits a plane reflecting surface and is arranged pivotable about at least one axis, the pivoting axis running completely in this reflecting surface.

6. Device according to claim 4, **characterised in that** the orientation of the reflecting surface with respect to the direction of propagation of the primary beam (8) oscillates about the or each pivoting axis.

7. Device according to one of the preceding claims, **characterised in that** at least one of the optical elements (4) is a partly transparent mirror.

8. Device according to one of the preceding claims, **characterised in that** the or each optical element (4) is displaceable both longitudinally and transversally in relation to the direction of propagation of the radiation emitted by the light-emitting device (2).

9. Device according to claim 3, **characterised in that** the light-emitting device (2) emits optical radiation of different wavelengths, each of the light waveguides (10) exclusively carrying light of a single wavelength.

10. Device according to one of the preceding claims, **characterised in that** the demodulated output signal of the light-receiving device (13) is fed to a control unit or adjusting unit for machines.

11. Device according to one of the preceding claims, **characterised in that** the demodulated output signal of the light-receiving device (13) is fed to a control unit or adjusting unit for moveable parts on cranes.

## Revendications

1. Dispositif de transmission optique de données entre un émetteur de lumière (2) qui émet un rayon primaire modulé (8), et une pluralité de récepteurs de lumière (13) à des fins de détection et de démodulation de la lumière émise par l'émetteur de lumière (2), dans lequel est placé au moins un élément optique (4) à l'intérieur du rayon primaire (8), de sorte qu'une partie du rayon primaire (8) au moins est incidente sur l'élément optique si ce n'est chaque élément optique (4), un rayon secondaire (9) peut alors être diaphragmé à partir du rayon primaire, et l'élément optique si ce n'est chaque élément optique (4) dévie le rayon secondaire (9), et le rayon secondaire (9), après la sortie de l'élément optique si ce n'est de chaque élément optique (4), se propage dans l'espace libre dans un sens différent du sens de propagation du rayon primaire (8), **caractérisé en ce qu'**un des éléments optiques au moins réalise une oscillation mécanique par laquelle le rayon secondaire (9) s'étend au moins temporairement dans une gamme d'angle solide qui n'est pas embrassée par le rayon primaire.

2. Dispositif selon la revendication 1, **caractérisé en ce qu'**un des éléments optiques (4) au moins comprend un guide d'ondes lumineuses (10) qui est fixé à une extrémité sur laquelle est incident le rayon secondaire (9), et réalise sur l'autre extrémité une oscillation mécanique.

3. Dispositif selon la revendication 2, **caractérisé en ce que** à chaque guide d'ondes lumineuses (10) est attribué autant une optique de modulation (11) qui alimente une partie du rayon primaire (8) dans le guide d'ondes lumineuses, qu'une optique de déclenchement (12) destinée au déclenchement du rayon secondaire (9) dirigé dans le guide d'ondes lumineuses (10).

4. Dispositif selon la revendication 1, **caractérisé en qu'**un des éléments optiques (4) au moins comprend un faisceau de guides d'ondes lumineuses qui est formé par une pluralité de guides d'ondes lumineuses (10) dont les extrémités de modulation sont disposées horizontalement en faisceau les unes à côté des autres, et une optique est attribuée au faisceau de guide d'ondes lumineuses afin de diaphragmer le rayon secondaire (9) depuis le rayon primaire (8) et d'alimenter le rayon secondaire (9) dans le faisceau de guides d'ondes lumineuses, moyennant quoi les extrémités de déclenchement des différents guides d'ondes lumineuses (10) sont disposées de façon mobile en étant indépendantes les unes des autres.

5. Dispositif selon l'une des revendications précédentes, **caractérisé en qu'**un des éléments optiques (4) au moins comprend une surface réfléchissante plane et est disposé de façon orientable autour d'un axe au moins, moyennant quoi l'axe de pivotement se développe entièrement dans cette surface réfléchissante.

6. Dispositif selon la revendication 4, **caractérisé en que** l'orientation de la surface réfléchissante oscille par rapport au sens de propagation du rayon primaire (8) autour de l'axe de pivotement si ce n'est de chaque axe de pivotement.

7. Dispositif selon l'une des revendications précédentes, **caractérisé en ce qu'**un des éléments optiques (4) au moins est un miroir partiellement transparent.

8. Dispositif selon l'une des revendications précédentes, **caractérisé en ce que** l'élément optique si ce n'est chaque élément optique (4) peut être déplacé autant dans le sens longitudinal que dans le sens transversal par rapport au sens de propagation du rayonnement émis par l'émetteur de lumière (2).

9. Dispositif selon la revendication 3, **caractérisé en ce que** l'émetteur de lumière (2) émet un rayonnement optique de différentes longueurs d'ondes, moyennant quoi chaque guide d'ondes lumineuses (10) dirige exclusivement la lumière d'une seule longueur d'onde.

10. Dispositif selon l'une des revendications précédentes, **caractérisé en que** le signal de sortie démodulé du récepteur de lumière (13) d'une unité de commande ou unité de réglage est alimenté par des moteurs.

11. Dispositif selon l'une des revendications précédentes, **caractérisé en que** le signal de sortie démodulé du récepteur de lumière (13) d'une unité de commande ou unité de réglage est alimenté par les parties mobiles situées sur des grues.
